# EUROPEAN PATENT APPLICATION

(11) **EP 2 977 870 A1**
(43) Date of publication of application: **27.01.2016**
(21) Application number: 14807949.4
(22) Date of filing: 26.05.2014
(51) Int. Cl.: G06F 3/042, G02B 6/122, G02B 6/42

(54) **ELECTRONIC UNDERLAY**

(30) Priority: 06.06.2013 JP 2013120089; 09.05.2014 JP 2014097530
(71) Applicant: Nitto Denko Corporation, Ibaraki-shi, Osaka 567-8680 (JP)
(72) Inventor: YOSHIOKA Ryoma, Ibaraki-shi Osaka 567-8680 (JP); SHIMIZU Yusuke, Ibaraki-shi Osaka 567-8680 (JP)
(74) Representative: Hoffmann Eitle
(86) International application number: PCT/JP2014/063787
(87) International publication number: WO 2014/196390

(57) **Abstract**

Provided is an electronic underlay in which, even when a hand, a finger, or the like is laid on a writing trace or an uneven portion on a paper, the writing trace or the like is not detected. The electronic underlay is placed beneath a paper, which is written upon using a writing tool, and includes: an optical waveguide W in a sheet form configured such that linear cores 2 arranged in a lattice form are held between an under cladding layer 1 and an over cladding layer 3 both in a sheet form; a light-emitting element 4 connected to one end surface of the linear cores arranged in the lattice form; and a light-receiving element 5 connected to the other end surface of the linear cores 2. Further, the over cladding layer 3 is covered with a sheet material S made of a resin or the like, and the sheet material S has an elasticity modulus within a range of from 1 MPa to 200 GPa and a thickness within a range of from 5 µm to 200 µm.

## Description

### Technical Field

The present invention relates to an electronic underlay, which is configured to be placed beneath a paper, which is written upon using a writing tool, and to optically detect a pressed position of a tip end of the writing tool on a surface of the paper.

### Background Art

As an input device for inputting characters and the like, an input device including a pressure-sensitive touch panel and a display has been hereto proposed (see, for example, PTL 1). This input device has the following configuration. When a paper is placed on the pressure-sensitive touch panel, and characters and the like are written on the paper using a writing tool (such as a pen), a pressed position of its tip end (such as a pen tip) is detected by the pressure-sensitive touch panel to be output onto the display, with the result that the above-mentioned written characters and the like are displayed on the display.

On the other hand, there has been proposed a position sensor for optically detecting a pressed position (see, for example, PTL 2). This position sensor has the following configuration. A plurality of cores serving as optical paths are arranged in two directions perpendicular to each other and such that a cladding covers peripheral edge portions of the cores to provide an optical waveguide in a sheet form. The position sensor is also configured such that light from a light-emitting element is incident on one end surface of the cores and such that the light propagating in the cores is received by a light-receiving element at the other end surface of the cores. Then, when part of a surface of the optical waveguide in the sheet form is pressed with a finger and the like, some of the cores corresponding to the pressed portion are crushed (decreased in cross-sectional area as seen in a pressed direction), and in the cores corresponding to the pressed part, the level of the light received by the light-receiving element decreases so that the pressed position can be detected.

### Citation List

### Patent Documents

[PTL 1] JP-A-2006-172230
[PTL 2] JP-A-HEI08-234895

### Summary

However, in the input device of PTL 1 described above, in spite of the fact that nothing is written on the paper using the writing tool, there is a written portion in some cases, which is erroneously displayed on the display.

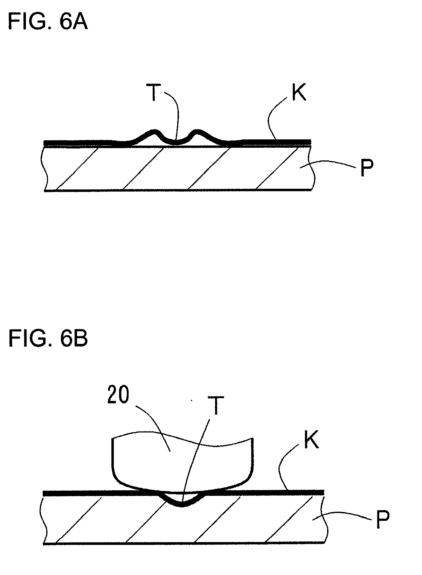

The inventors of the present inventionhave investigated the cause of the foregoing, and as a result, have found that when a hand, a finger, or the like is laid on a writing trace (moving trace of a tip end of the writing tool), a portion corresponding to the writing trace is displayed on the display. That is, as illustrated in FIG. 6A, in a paper K, a writing trace T may remain recessed in a groove shape. In this case, as illustrated in FIG. 6B, when a hand 20, a finger, or the like is laid on the portion recessed in a groove shape (writing trace T), the portion recessed in a groove shape (writing trace T) presses a surface of a pressure-sensitive touch panel P, and the pressed portion is detected by the pressure-sensitive touch panel P to be displayed on a display. Further, there may be an uneven portion such as creases on both surfaces of the paper K, and in this case, the uneven portion is also erroneously displayed on the display in the same way as in the above.

Further, it has been also found that, even when the pressure-sensitive touch panel P of PTL 1 described above is replaced by the position sensor using the optical waveguide of PTL 2 described above, the pressed portion is erroneously displayed on the display in the same way as in the above.

The present invention has been made in view of the above-mentioned circumstances, and it is an object of the present invention to provide an electronic underlay in which, even when a hand, a finger, or the like is laid on a writing trace or an uneven portion on a paper, the writing trace or the like is not detected.

In order to achieve the above-mentioned object, according to one embodiment of the present invention, there is provided an electronic underlay comprising: an optical waveguide in a sheet form including an under cladding layer in a sheet form, a plurality of linear cores arranged in a lattice form and formed on a surface of the under cladding layer, and an over cladding layer in a sheet form formed to cover the cores; a light-emitting element connected to one end surface of the cores; a light-receiving element connected to the other end surface of the cores; and a sheet material covering a surface of the over cladding layer, and having an elasticity modulus within a range of from 1 MPa to 200 GPa, and a thickness within a range of from 5 µm to 200 µm, wherein the electronic underlay is placed beneath a paper, which is written upon using a written tool, wherein a surface of the sheet material serves as a contact surface for the paper, and wherein a pressed portion is specified based on a change in the amount of light propagation in the cores when the surface of the over cladding layer is pressed at any portion, via the sheet material.

The inventors of the present invention have made extensive investigations on a configuration of the above-mentioned optical waveguide so that an unwritten portion is not detected when the paper is placed on the surface of the over cladding layer of the optical waveguide ina sheet form for detecting apressedposition, and characters and the like are written on the paper using the writing tool such as a pen. Through a process of the investigations, the inventors of the present invention have conceived that the surface of the over cladding layer is covered with the sheet material, and the paper is placed on a surface of the sheet material. Then, as a result of the further investigations on the characteristics of the sheet material, the inventors of the present invention have found that, in the case where the sheet material having the above-mentioned elasticity modulus and thickness is used as the sheet material, even when a paper having a writing trace or an uneven portion is placed on the surface of the sheet material, and a hand, a finger, or the like is laid on the writing trace or the like, the writing trace or the like is not detected. Thus, the inventors have arrived at the present invention.

Specifically, the sheet material is formed beneath the paper, and hence the shape of the writing trace or the like is deformed so as return to an original flat shape through the combination of the function of an elasticity modulus of the sheet material and the function of a thickness thereof, when a hand or the like is laid on the writing trace or the like. As a result, the deformation amount of the optical waveguide caused by the writing trace or the like decreases, and the writing trace or the like is not detected. Further, when characters and the like are written on the paper using the writing tool, a moving trace of a tip end of the writing tool can be detected appropriately even if the sheet material is formed, because the sheet material has the elasticity modulus and the thickness within appropriate ranges. Further, by virtue of the sheet material, writing feeling using the writing tool becomes satisfactory.

In the electronic underlay of the embodiment, the surface of the over cladding layer serving as the mounting surface for the paper is covered with the sheet material having the elasticity modulus and thickness. Therefore, when a paper having a writing trace or an uneven portion is placed on the surface of the sheet material, and a hand, a finger, or the like is laid on the writing trace or the like, the shape of the writing trace or the like can be deformed so as to return to an original flat shape through the combination of the function of an elasticity modulus of the sheet material and the function of a thickness thereof. As a result, the deformation amount of the optical waveguide caused by the writing trace or the like can be decreased, and the writing trace or the like cannot be detected. Further, when characters and the like are written on the paper using the writing tool, a moving trace of a tip end of the writing tool can be detected appropriately even if the sheet material is formed, because the sheet material has the elasticity modulus and the thickness within appropriate ranges. Further, by virtue of the sheet material, writing feeling using the writing tool can be made satisfactory.

### Brief Description of Drawings

FIGS. 1A and 1B are views for schematically illustrating one embodiment of an electronic underlay, where FIG. 1A is its plan view and FIG. 1B is an enlarged sectional view thereof.
FIG. 2 is a side view for schematically illustrating a usage state of the electronic underlay.
FIG. 3A is an enlarged sectional view for schematically illustrating a state of a tip end portion of a writing tool in the above-mentioned usage state, and FIG. 3B is an enlarged sectional view for schematically illustrating a state of a portion in which a hand, a finger, or the like is laid on a writing trace.
FIG. 4A to FIG. 4F are enlarged plan views for schematically illustrating configurations of intersection of linear cores arranged in a lattice form in the electronic underlay.
FIG. 5A and FIG. 5B are enlarged plan views for schematically illustrating paths of light at an intersection of the linear cores arranged in a lattice from.
FIG. 6A is an enlarged sectional view for schematically illustrating a state of a writing trace in a paper on a conventional pressure-sensitive touch panel, and FIG. 6B is an enlarged sectional view for schematically illustrating a state of a portion in which a hand, a finger, or the like is laid on the writing trace.

### Description of Embodiments

Next, an embodiment of the present invention is described in detail based on the drawings.

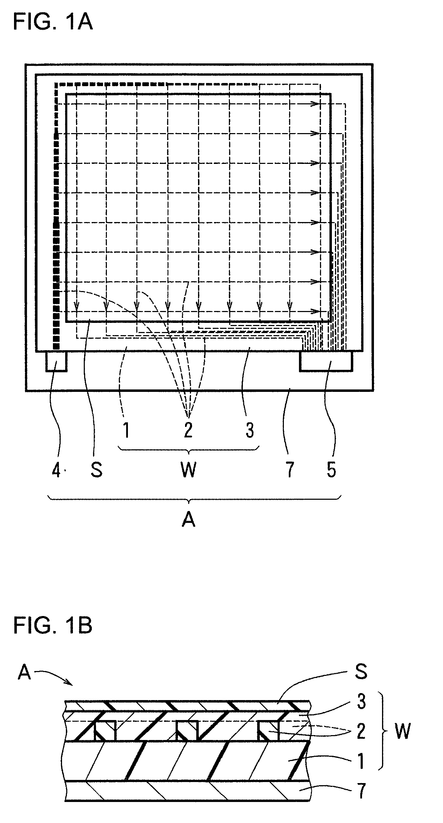

FIG. 1A is a plan view for illustrating one embodiment of an electronic underlay, and FIG. 1B is a sectional view, on an enlarged scale, of a middle portion of the electronic underlay. An electronic underlay A of this embodiment includes: an optical waveguide W in a rectangular sheet form configured such that linear cores 2 arranged in a lattice form and held between an under cladding layer 1 and an over cladding layer 3 both in a rectangular sheet form; a light-emitting element 4 connected to one end surface of linear cores 2 arranged in a lattice form; and a light-receiving element 5 connected to the other end surface of the linear cores 2. Then, light emitted from the light-emitting element 4 passes through the cores 2 and is received by the light-receiving element 5. In this embodiment, the optical waveguide W, the light-emitting element 4, and the light-receiving element 5 are formed on a surface of a rigid plate 7 such as a resin plate or a metal plate. Further, in this embodiment, the over cladding layer 3 is covered with a sheet material S made of a resin or the like, and the sheet material S has an elasticity modulus within a range of from 1 MPa to 200 GPa and a thickness within a range of from 5 µm to 200 µm.

It is to be noted that in FIG. 1A, the cores 2 are indicated by broken lines, and a thickness of the broken lines indicates the thickness of the cores 2. Further, in FIG. 1A, the number of the cores 2 are shown as abbreviated. Moreover, arrows of FIG. 1A indicate the directions in which light travels.

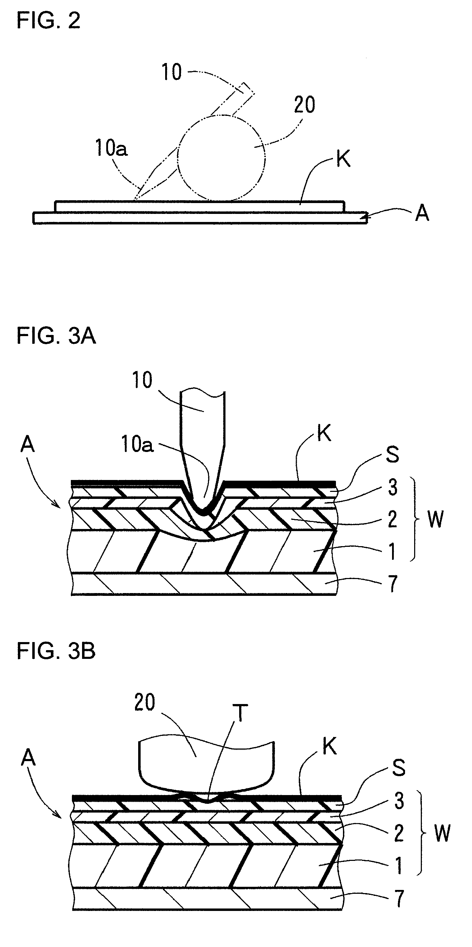

As illustrated in the side view of FIG. 2, the electronic underlay A is used by being placed beneath a paper K to write notes and the like on using a writing tool 10. At this time, the surface of the sheet material S [see FIGS. 3A and 3B] in the optical waveguide W of the electronic underlay A is the contact surface for the paper K. Then, the notes and the like are inputted by holding the writing tool 10 with a hand 20 and writing the notes and the like on the surface of the paper K using the writing tool 10. An input region on the paper K is a portion corresponding to the linear cores 2 arranged in a lattice form (see FIG. 1A) in the optical waveguide W of the electronic underlay A.

That is, as illustrated in the enlarged sectional view of FIG. 3A, when notes and the like are written on the surface of the paper K by writing using the writing tool 10 such as a pen held in the hand 20 or by some other means, writing pressure by a tip end 10a of a pen tip or the like is transmitted to the over cladding layer 3 via the paper K and the sheet material S, and the optical waveguide W is pressed. With this, in the pressed portion of the tip end 10a of a pen tip or the like, the cores 2 are deformed, and the propagation of light in the cores 2 is hindered to decrease the level of light received in the light-receiving element 5, with the result that the pressed position is detected.

Further, in the pressed portion, the paper K and the sheet material S are also recessed in a groove shape by being pressed with the tip end 10a of a pen tip or the like. Then, in a writing trace (moving trace of the tip end 10a of the writing tool 10), the aforementioned pressing is released, and the optical waveguide W and the sheet material S return to an original flat state (see FIG. 1B) by their own resilience. However, in the paper K, the writing trace T remains recessed in a groove shape in some cases (see FIG. 6A). In this case, as illustrated in the enlarged sectional view of FIG. 3B, when the hand 20, a finger, or the like is laid on a portion recessed in a groove shape (writing trace T), the portion recessed in a groove shape (writing trace T) is deformed so as to return to an original flat state by a combination of the function of an elasticity modulus and thickness of the sheet material S. As a result, even when the hand 20, a finger, or the like is laid on the portion recessed in a groove shape (writing trace T), a portion corresponding to the optical waveguide W is not deformed to such a degree that the propagation of light in the cores 2 is hindered, and the portion corresponding to the writing trace T is not detected.

Further, when notes and the like are written on the paper K, writing feeling using the writing tool 10 is satisfactory because the sheet material S is formed underneath the paper K.

Now, the sheet material S is described in more detail.

As described above, the sheet material S has an elasticity modulus within a range of from 1 MPa to 200 GPa and a thickness within a range of from 5 µm to 200 µm. Of those, from the viewpoint that an S/N ratio increases (noise (N) is low) regardless of the elasticity modulus, the thickness is preferably about 100 µm. Note that, in the case where the sheet material S is bonded to a surface of the over cladding layer 3 with a double-sided adhesive tape, the elasticity modulus and the thickness of the sheet material S including the double-sided adhesive tape are within the above-mentioned ranges.

As a material for forming the sheet material S, for example, there is given a resin such as polyethylene terephthalate (PET), polyimide (PI), or polyethylene naphthalate (PEN), a rubber such as silicone rubber or acrylic rubber, or a metal such as stainless steel or aluminum.

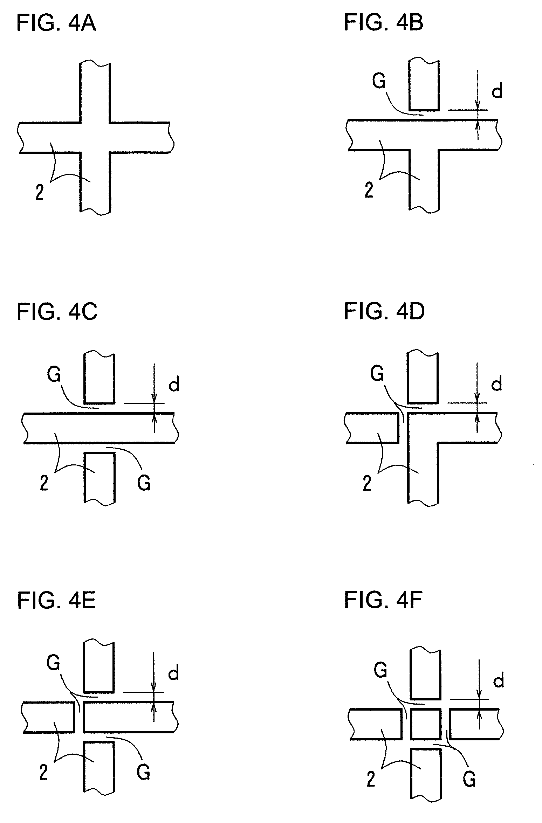

Note that, in this embodiment, each intersection of the cores 2 in the lattice form is configured to be continuous in all of the four intersecting directions as illustrated in the enlarged plan view of FIG. 4A, but may be of other configurations. For example, as illustrated in FIG. 4B, each intersection may be separated by a gap G to become discontinuous only in one of the intersecting directions. The gap G is made of the material for forming the under cladding layer 1 or the over cladding layer 3. The gap G has a width d greater than 0 (zero) (it is only necessary that the gap G is formed) and generally 20 µm or less. Likewise, as illustrated in FIG. 4C and 4D, each intersection may be discontinuous in two intersecting directions (in two opposed directions as seen in FIG. 4C and in two adjacent directions as seen in FIG. 4D). As illustrated in FIG. 4E, each intersection may be discontinuous in three intersecting directions. As illustrated in FIG. 4F, each intersection may be discontinuous in all of the four intersecting directions. Further, the cores 2 may be arranged in a lattice form including two or more types of intersections illustrated in FIG. 4A to FIG. 4F. The term "lattice form" formed by the linear cores 2 as used in the embodiments shall be meant to include a lattice form in which part or all of the intersections are formed in the aforementioned manner.

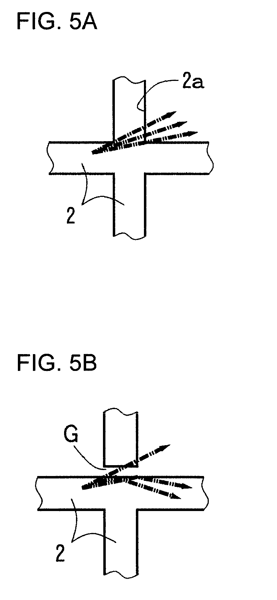

Of those, as illustrated in FIG. 4B to FIG. 4F, intersections which are discontinuous in at least one intersecting direction are capable of reducing intersection losses of light. That is, at an intersection which is continuous in all of the four intersecting directions as illustrated in FIG. 5A, when one intersecting direction (upward direction as seen in FIG. 5A) is focused, part of light incident on the intersection reaches a wall surface 2a of a first core 2 perpendicular to a second core 2 through which the light travels. The reflection angle of the light from the wall surface is large, and hence the light is transmitted through the first core 2 (see dash-double-dot arrows of FIG. 5A). Such transmission of light occurs also in the opposite direction (downward direction as seen in FIG. 5A). In contrast, when an intersection is made discontinuous by the gap G in one intersecting direction (upward direction as seen in FIG. 5B) as illustrated in FIG. 5B, an interface between the gap G and a core 2 is formed, and part of light transmitted through the core 2 in FIG. 5A is not transmitted through the core 2 but is reflected from the interface to continue travelling through the core 2 (see dash-double-dot arrows of FIG. 5B) because of the smaller angle of reflection at the interface. From the foregoing, as described above, the reduction in intersection losses of light is achieved by making the intersection discontinuous in at least one intersecting direction. As a result, the detection sensitivity of the pressed position of a pen tip or the like is increased.

Further, the thickness of the paper K is generally used is within a range of from 1 µm to 200 µm. Of those, the thickness is preferably about 100 µm. When the paper K becomes too thin, the noise increases, and the S/N ratio tends to be degraded. When the paper K becomes too thick, the detection sensitivity of the pressed position of the tip end 10a of the writing tool 10 decreases (a signal (S) lowers), and the S/N ratio tends to be degraded.

Further, in the above-mentioned embodiment, examples of formation materials for the cores 2, the under cladding layer 1, and the over cladding layer 3 include photosensitive resins and thermosetting resins. The optical waveguide W may be produced by a manufacturing method depending on the formation materials. Further, the cores 2 have a refractive index higher than the refractive indices of the under cladding layer 1 and the over cladding layer 3. Further, the refractive indices can be adjusted, for example, by adjusting the selection of the types of the materials for the formation of the cores 2, the under cladding layer 1 and the over cladding layer 3, and the composition ratio thereof. It is to be noted that a rubber sheet may be used as the under cladding layer 1, and the cores 2 may be formed in a lattice form on the rubber sheet.

Further, an elastic layer such as a rubber layer may be formed on the lower surface of the under cladding layer 1 when required. In this case, even when the resilience of the under cladding layer 1, the cores 2, and the over cladding layer 3 is weakened, or when the under cladding layer 1, the cores 2, and the over cladding layer 3 are originally made of materials with weak resilience, the elastic force of the elastic layer may be used to assist the weak resilience, thereby allowing the under cladding layer 1, the cores 2 and the over cladding layer 3 to return to their original states after pressing by the pressed portion is released.

Next, Examples will be described in conjunction with Comparative Examples. However, the present invention is not limited to the examples.

### EXAMPLE

### [Formation Material for Over Cladding Layer]

Component a: 40 parts by weight of an epoxy resin (EPOGOSEY PT., available from Yokkaichi Chemical Company Ltd.)
Component b: 60 parts by weight of an epoxy resin (2021P, available from Daicel Corporation)
Component c: 4 parts by weight of aphoto-acidgenerator (SP170, available from ADEKA CORPORATION)

A formation material for the over cladding layer was prepared by mixing these components a to c together.

### [Formation Material for Cores]

Component d: 30 parts by weight of an epoxy resin (EPOGOSEY PT., available from Yokkaichi Chemical Company Ltd.)
Component e: 70 parts by weight of an epoxy resin (EXA-4816, available from DIC CORPORATION)
Component f: 4 parts by weight of a photo-acid generator (SP170, available from ADEKA CORPORATION)

A formation material for the core was prepared by mixing these components d to f together.

### [Formation Material for Under Cladding Layer]

Component g: 40 parts by weight of an epoxy resin (EPOGOSEY PT., available from Yokkaichi Chemical Company Ltd.)
Component h: 60 parts by weight of an epoxy resin (2021P, available from Daicel Corporation)
Component i: 4 parts by weight of aphoto-acidgenerator (SP170, available from ADEKA CORPORATION)

A formation material for the under cladding layer was prepared by mixing these components g to I together.

### [Production of Optical Waveguide]

Using the above formation material for the over cladding layer, an over cladding layer was formed on the surface of a base material made of glass by a spin coating method. This over cladding layer had a thickness of 5 µm, an elasticity modulus of 1 GPa, and a refractive index of 1.504.

Subsequently, using the above formation material for the cores, the cores were formed on a surface of the over cladding layer by a photolithography method. The cores had a thickness of 30 µm, a width of 100 µm in a portion of a lattice form, a pitch of 600 µm, an elasticity modulus of 25 MPa, and a refractive index of 1.523.

Next, using the above formation material for the under cladding layer, an under cladding layer was formed on the surface of the over cladding layer by spin coating method so as to cover the cores. This under cladding layer had a thickness (thickness from the surface of the over cladding layer) of 200 µm, an elasticity modulus of 1 GPa, and a refractive index of 1.504.

Then, a substrate made of a polycarbonate (PC) with a double-sided adhesive tape affixed to one surface thereof was prepared. Subsequently, the other adhesive surface of the double-sided adhesive tape was affixed to adhere to the surface of the under cladding layer, and in that state, the over cladding layer was stripped from the base material made of glass.

### [Example 1]

### [Production of Electronic Underlay]

After that, the surface of the over cladding layer was covered with a sheet material (thickness: 5 µm) made of PET. The sheet material had an elasticity modulus of 1 MPa. Note that, for measuring the elasticitymodulus, a viscoelasticity measurement device ("RSA3" manufactured by TA Instruments Japan Inc.) was used.

Next, a light emitting element ("XH85-S0603-2s" manufactured by Optowell Co. , Ltd.) was connected to one end surface of the cores, and a light receiving element ("s10226" manufactured by Hamamatsu Photonics K.K.) was connected to the other end surface of the cores.

### [Example 2]

The thickness of the sheet material was set to 100 µm in the electronic underlay of Example 1 described above. The sheet material had an elasticity modulus of 100 GPa. The other portions were set in the same manner as in Example 1 described above.

### [Example 3]

The thickness of the sheet material was set to 200 µm in the electronic underlay of Example 1 described above. The sheet material had an elasticity modulus of 200 GPa. The other portions were set in the same manner as in Example 1 described above.

### [Comparative Example 1]

The electronic underlay of Example 1 described above in which the sheet material was not formed was prepared for a comparative example. The other portions were set in the same manner as in Example 1 described above.

### [Comparative Example 2]

The thickness of the sheet material was set to 2 µm in the electronic underlay of Example 1 described above. The sheet material had an elasticity modulus of 0.5 MPa. The other portions were set in the same manner as in Example 1 described above.

### [Comparative Example 3]

The thickness of the sheet material was set to 300 µm in the electronic underlay of Example 1 described above. The sheet material had an elasticity modulus of 300 GPa. The other portions were set in the same manner as in Example 1 described above.

### [Evaluation of Electronic Underlay]

A paper having a thickness of 100 µm was placed on a surface of each of the electronic underlays of Examples 1 to 3 and Comparative Examples 1 to 3 described above (on a surface of the over cladding layer in Comparative Example 1, or on a surface of the sheet material in any other examples), and characters were written on a surface of the paper. Then, the case where the characters were detected was evaluated to be acceptable "○", and the case where the characters were not detected was evaluated to be unacceptable "x". The results are shown in Table 1 below.

Then, a base portion (hypohtenar) of a little finger of a hand was laid on a writing trace of the characters on the paper. Then, the case where the writing trace was not detected was evaluated to be acceptable "○", and the case where the writing trace was detected was evaluated to be unacceptable "×". The results are shown in Table 1 below.

**[Table 1]**

| | | Example | | | Comparative Example | | |
|---|---|---|---|---|---|---|---|
| | | 1 | 2 | 3 | 1 | 2 | 3 |
| Sheet material | Thickness (µm) | 5 | 100 | 200 | - | 2 | 300 |
| | Elastic modulus (Pa) | 1 M | 100 G | 200 G | - | 0.5 M | 300 G |
| Detectability of characters | | ○ | ○ | ○ | ○ | ○ | × |
| Undetectability of writing trace | | ○ | ○ | ○ | × | × | ○ |

It is understood from the results of Table 1 above that, in each of the electronic underlays of Examples 1 to 3, the characters written on the surface of the paper were detected, and the writing trace was not detected even when the hand was laid on the writing trace. In contrast, it is understood that in each of the electronic underlays of Comparative Examples 1 and 2, although the characters written on the surface of the paper were detected, the writing trace was detected when the hand was laid on the writing trace, and in the electronic underlay of Comparative Example 3, although the writing trace was not detected, the characters written on the surface of the paper were not detected.

Further, even when the sheet material was replaced by a material made of PI, a material made of PET, a material made of silicone rubber, or a material made of stainless steel, the results, in which each case exhibited the same tendencies as those in the foregoing, were obtained.

Although the specific forms in the present invention have been shown in Examples described above, Examples described above are mere exemplification, and should not be restrictively interpreted. A variety of modifications apparent to the skilled person in the art are intended to be within the scope of the present invention.

The electronic underlay of the embodiment can be used for detecting a tip end of a writing tool when the electronic underlay is placed underneath a paper, and notes and the like are written on the paper using the writing tool.

### Reference Signs List

- S: sheet material
- W: optical waveguide
- 1: under cladding layer
- 2: cores
- 3: over cladding layer
- 4: light-emitting element
- 5: light-receiving element

## Claims

1. An electronic underlay comprising:
an optical waveguide in a sheet form including an under cladding layer in a sheet form, a plurality of linear cores arranged in a lattice form and formed on a surface of the under cladding layer, and an over cladding layer in a sheet form formed to cover the cores;
a light-emitting element connected to one end surface of the cores;
a light-receiving element connected to an other end surface of the cores; and
a sheet material covering a surface of the over cladding layer, and having an elasticity modulus within a range of from 1 MPa to 200 GPa, and a thickness within a range of from 5 µm to 200 µm,
wherein the electronic underlay is placed beneath a paper, which is written upon using a writing tool,
wherein a surface of the sheet material serves as a contact surface for the paper, and
wherein a pressed position is specified based on a change in the amount of light propagation in the cores when the surface of the over cladding layer is pressed at any portion, via the sheet material.
